(19) Europäisches Patentamt / European Patent Office / Office européen des brevets

(11) **EP 4 047 328 A1**

(12) **EUROPÄISCHE PATENTANMELDUNG**

(43) Veröffentlichungstag:
**24.08.2022 Patentblatt 2022/34**

(21) Anmeldenummer: **22157485.8**

(22) Anmeldetag: **18.02.2022**

(51) Internationale Patentklassifikation (IPC):
**G01F 1/667** (2022.01) **G01F 1/66** (2022.01)

(52) Gemeinsame Patentklassifikation (CPC):
**G01F 1/667; G01F 1/662**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **23.02.2021 DE 102021104288**

(71) Anmelder: **Krohne Messtechnik GmbH**
**47058 Duisburg (DE)**

(72) Erfinder: **VOGT, Michael**
**44797 Bochum (DE)**

(74) Vertreter: **Gesthuysen Patentanwälte**
**Huyssenallee 100**
**45128 Essen (DE)**

(54) **ULTRASCHALLDURCHFLUSSMESSGERÄT UND VERFAHREN ZUR BESTIMMUNG DER GESCHWINDIGKEIT EINES STRÖMENDEN MEDIUMS**

(57) Beschrieben und dargestellt ist ein Ultraschalldurchflussmessgerät (1), umfassend wenigstens einen ersten (3) und einen zweiten Ultraschallwandler (4), wobei der erste Ultraschallwandler (3) und der zweite Ultraschallwandler (4) jeweils als Ultraschallsender und/oder Ultraschallempfänger ausgebildet sind, wobei der erste Ultraschallwandler (3) und der zweite Ultraschallwandler (4) im Betrieb auf einem Messrohr (5) derart versetzt zueinander angeordnet sind, dass zwischen dem ersten Ultraschallwandler (3) und dem zweiten Ultraschallwandler (4) ein Messpfad L vorhanden ist, wobei der Messpfad L durch den Verlauf des Ultraschall-Messsignals im Betrieb definiert wird, und weiterhin umfassend eine Steuer- und Auswerteeinheit (6) zur Steuerung der Ultraschallwandler (3,4) und zur Auswertung der gemessenen Signale, das sich dadurch auszeichnet, dass wenigstens ein dritter Ultraschallwandler (7) vorhanden ist, der im Betrieb derart auf dem Messrohr (5) angeordnet ist, dass er einen zusätzlichen Referenzpfad $L_0$ definiert, wobei der Referenzpfad $L_0$ den Verlauf der von wenigstens einem Ultraschallsender (3, 4, 8) in die Messrohrwand ausgesendete Lamb-Welle umfasst und dass die Steuer- und Auswerteeinheit (6) derart ausgebildet ist, dass sie im Betrieb die Geschwindigkeit eines durch das Messrohr (5) strömenden Mediums unter Berücksichtigung der Ausbreitungsgeschwindigkeit der Lamb-Welle in der Messrohrwand bestimmt.

Fig. 2

EP 4 047 328 A1

**Beschreibung**

Die Erfindung geht aus von einem Ultraschalldurchflussmessgerät, umfassend wenigstens einen ersten und einen zweiten Ultraschallwandler,

wobei der erste Ultraschallwandler und der zweite Ultraschallwandler jeweils als Ultraschallsender und/oder Ultraschallempfänger ausgebildet sind,

wobei der erste Ultraschallwandler und der zweite Ultraschallwandler im Betrieb auf einem Messrohr derart versetzt zueinander angeordnet sind, dass zwischen dem ersten Ultraschallwandler und dem zweiten Ultraschallwandler ein Messpfad L vorhanden ist, wobei der Messpfad L durch den Verlauf des Ultraschall-Messsignals im Betrieb definiert wird, und

weiterhin umfassend eine Steuer- und Auswerteeinheit zur Steuerung der Ultraschallwandler und zur Auswertung der gemessenen Signale.

Darüber hinaus betrifft die Erfindung ein Verfahren zur Bestimmung der Geschwindigkeit eines strömenden Mediums mittels eines Ultraschalldurchflussmessgeräts, wobei das Ultraschalldurchflussmessgerät wenigstens einen ersten Ultraschallwandler und einen zweiten Ultraschallwandler umfasst,

wobei der erste Ultraschallwandler und der zweite Ultraschallwandler jeweils als Ultraschallsender und/oder Ultraschallempfänger ausgebildet sind,

wobei der erste Ultraschallwandler und der zweite Ultraschallwandler auf einem Messrohr derart versetzt zueinander angeordnet sind, dass zwischen dem ersten Ultraschallwandler und dem zweiten Ultraschallwandler ein Messpfad L vorhanden ist, wobei der Messpfad L durch den Verlauf des Ultraschall-Messsignals im Betrieb definiert wird, und

weiterhin umfassend eine Steuer- und Auswerteeinheit zur Steuerung der Ultraschallwandler und zur Auswertung der gemessenen Signale.

Aus dem Stand der Technik sind verschiedene Arten von Ultraschalldurchmessgeräten bekannt. Unterschieden werden kann beispielsweise zwischen Ultraschalldurchflussmessgeräten, bei denen die Ultraschallwandler zur Erzeugung bzw. für den Empfang des Messsignals in die Messrohrwand integriert sind, sodass das Ultraschallsignal unmittelbar in das zu messende Medium ausgesendet wird und Ultraschallmessgeräten, bei denen die Ultraschallwandler auf der Außenseite des Messrohrs angeordnet sind, sodass das Ultraschallsignal durch die Messrohrwand in das zu messende Medium ein- und auch wieder austritt.

Insbesondere die letztgenannten Ultraschalldurchflussmesssysteme weisen das Problem auf, dass die Einkopplung, insbesondere der Einkoppelwinkel, des erzeugten Ultraschallsignals aus der Messrohrwand in das Messrohr von den Parametern des Messrohrs, insbesondere von dem Messrohrmaterial und der Dicke des Messrohrs, aber auch von den Parametern des strömenden Mediums sowie von den aktuellen Betriebsparametern abhängt. Darüber hinaus breitet sich gegebenenfalls auch ein Teil des in die Messrohrwand ausgesendeten Signals als Lamb-Welle entlang der Messrohrwand aus.

Dies ist insofern nachteilig, als dass beispielsweise bei Clamp-On-Messgeräten, bei denen die Ultraschallmessanordnung auf in der Messumgebung integrierte Rohre angeordnet wird, der Signalverlauf innerhalb des Messrohrs nicht genau bekannt ist. Dies führt dazu, dass der Durchflussmessung ein systematischer Fehler zugrunde liegt.

Es ist daher Aufgabe der Erfindung, ein Ultraschalldurchflussmessgerät anzugeben, das eine erhöhte Messgenauigkeit aufweist. Zudem ist es Aufgabe der Erfindung, ein Verfahren zur Bestimmung der Geschwindigkeit eines strömenden Mediums anzugeben, das eine erhöhte Messgenauigkeit aufweist.

Gemäß einer ersten Lehre der vorliegenden Erfindung wird die zuvor dargelegte Aufgabe durch ein eingangs beschriebenes Ultraschalldurchflussmessgerät dadurch gelöst, dass wenigstens ein dritter Ultraschallwandler vorhanden ist, der im Betrieb derart auf dem Messrohr angeordnet ist, dass er einen zusätzlichen Referenzpfad $L_0$ definiert, wobei der Referenzpfad $L_0$ den Verlauf der von wenigstens einem Ultraschallsender in die Messrohrwand ausgesendeten Lamb-Welle umfasst und dass die Steuer- und Auswerteeinheit derart ausgebildet ist, dass sie im Betrieb die Geschwindigkeit eines durch das Messrohr strömenden Mediums unter Berücksichtigung der Ausbreitungsgeschwindigkeit der Lamb-Welle in der Messrohrwand bestimmt.

Erfindungsgemäß wurde erkannt, dass die Erfassung der Ausbreitung der Lamb-Welle, die üblicherweise als Störwelle erachtet wird, dazu genutzt werden kann, den genauen Eintritt bzw. Austritt des Messsignals in das bzw. aus dem Messrohr, insbesondere den Einkoppelwinkel, zu bestimmen. In der Folge weist der der Bestimmung der Strömungsgeschwindigkeit zugrunde liegende Messpfad innerhalb des Messrohrs eine höhere Genauigkeit auf. Darüber hinaus kann durch Kenntnis der Ausbreitungsgeschwindigkeit der Lamb-Welle in der Messrohrwand auch ein Laufzeit-Offset bestimmt werden, der dadurch zustande kommt, dass das Messsignal sich erneut entlang des Messrohrs ausbreitet, wenn es in Ausbreitungsrichtung vor dem Ultraschallempfänger auf das Messrohr trifft.

Wird also basierend auf der erfindungsgemäßen Anordnung des dritten Ultraschallwandlers die Ausbreitungsgeschwindigkeit der Lamb-Welle in der Messrohrwand bestimmt, kann die Bestimmung der Laufzeit des Messsignals und damit die Bestimmung der Geschwindigkeit des strömenden Mediums verbessert werden. Wenigstens ein Ultraschallwandler ist erfindungsgemäß daher derart ausgerichtet, dass er gezielt Lamb-Wellen in der Messrohrwand anregt.

Grundsätzlich kann jeder Ultraschallwandler als Keil-Wandler oder als Ultraschallkamm oder als Interdigital-Wandler ausgebildet sein. Besonders bevorzugt ist wenigstens der erste Ultraschallwandler und/oder der zweite Ultraschallwandler als Ultraschallkamm oder als Interdigital-Wandler ausgebildet.

Gemäß einer Ausgestaltung ist das Ultraschalldurchflussmessgerät ein Clamp-On-Messgerät. Bei dieser Ausgestaltung werden die Ultraschallwandler auf ein in eine Anlage integriertes Messrohr aufgesetzt. Gemäß einer alternativen Ausgestaltung ist das Messrohr Teil des Ultraschalldurchflussmessgerätes. In diesem Fall wird das Messrohr mit den Ultraschallwandlern in ein Rohrsystem, beispielsweise mittels Flanschen integriert.

Gemäß einer besonders bevorzugten Ausgestaltung verläuft der Referenzpfad $L_0$ räumlich getrennt vom Messpfad L innerhalb der Messrohrwand, vorzugsweise im Wesentlichen parallel zur Messrohrachse.

Gemäß einer Ausgestaltung ist der dritte Ultraschallwandler derart ausgebildet, dass er ebenfalls als Ultraschallsender und Ultraschallempfänger funktionieren kann. Alternativ kann der Ultraschallwandler auch nur als Ultraschallempfänger ausgebildet sein.

Wird die zu erfassende Lamb-Welle im Betrieb von dem ersten Ultraschallwandler ausgesendet, so ist vorzugsweise der dritte Ultraschallwandler zur Erfassung der Lamb-Welle in Ausbreitungsrichtung des Messsignals versetzt und auf gleicher Höhe mit dem ersten Ultraschallwandler angeordnet.

Besonders bevorzugt ist der Abstand zwischen dem ersten Ultraschallwandler und dem dritten Ultraschallwandler zur Erfassung der Lamb-Welle kleiner als der Abstand zwischen dem ersten Ultraschallwandler und dem zweiten Ultraschallwandler zur Erfassung des Messsignals.

Beispielsweise ist der dritte Ultraschallwandler zwischen dem ersten Ultraschallwandler und dem zweiten Ultraschallwandler angeordnet. Besonders bevorzugt sind die drei Ultraschallwandler auf einer Geraden, die im Wesentlichen parallel zur Messrohrachse verläuft, angeordnet. Gemäß dieser Ausgestaltung ist der Messpfad L vorzugsweise V-förmig oder W-förmig ausgebildet. Alternativ kann der dritte Ultraschallwandler auch auf gleicher Höhe mit dem ersten Ultraschallwandler angeordnet sein, wobei der zweite Ultraschallwandler auf der gegenüberliegenden Seite des Messrohrs angeordnet ist.

Ebenfalls bevorzugt ist es, wenn der Referenzpfad $L_0$ unabhängig von den Ultraschallwandlern, zwischen denen der Messpfad L verläuft, ausgebildet ist. Hierzu verläuft der Referenzpfad $L_0$ zwischen einem dritten und einem vierten Ultraschallwandler, wobei der dritte und der vierte Ultraschallwandler räumlich getrennt von dem ersten und dem zweiten Ultraschallwandler angeordnet sind. Beispielsweise sind der dritte und der vierte Ultraschall auf der gegenüberliegenden Seite des Messrohrs zu dem ersten und dem zweiten Ultraschallwandler angeordnet.

Die Anregung und die Bestimmung der Ausbreitungsgeschwindigkeit der Lamb-Welle in der Messrohrwand kann gemäß dieser Ausgestaltung besonders flexibel erfolgen, da sie unabhängig von der Aussendung eines Messsignals durch den ersten oder zweiten Ultraschallwandler ist. Besonders bevorzugt kann die Bestimmung der Ausbreitungsgeschwindigkeit der Lamb-Welle in Abhängigkeit von dem Wert eines Betriebsparameters erfolgen. Hierzu ist vorzugsweise ein weiterer Sensor vorhanden, der im Betrieb wenigstens einen Prozessparameter, beispielsweise die Temperatur des Messrohrs, bestimmt. Sofern der Wert des Prozessparameters einen Toleranzbereich überschreitet, wird die Ausbreitungsgeschwindigkeit der Lamb-Welle neu erfasst. Damit gewährleistet ist, dass eine separate Messung der Lamb-Welle unter den Prozessparametern, die der Durchflussmessung zugrunde liegen, stattfindet, sind der dritte und der vierte Ultraschallwandler in der Messumgebung des ersten und des zweiten Ultraschallwandlers angeordnet.

Gemäß einer nächsten Ausgestaltung ist wenigstens ein Ultraschallwandler als Ultraschallkamm oder als Interdigital-Wandler ausgebildet, sodass der wenigstens eine als Ultraschallkamm oder als Interdigital-Wandler ausgebildete Ultraschallwandler im Betrieb ein Signal aussendet, das sich auf einem ersten Signalpfad in Strömungsrichtung und auf einem zweiten Signalpfad entgegen der Strömungsrichtung ausbreitet, wobei ein Signalpfad dem Messpfad L entspricht und wobei vorzugsweise der dritte Ultraschallwandler auf der Seite des anderen Signalpfads angeordnet ist.

Gemäß dieser Ausgestaltung ist der Referenzpfad $L_0$ räumlich getrennt vom Messpfad L ausgebildet, wobei der Referenzpfad $L_0$ zudem in entgegengesetzter Richtung zum Messpfad L verläuft. Diese Ausgestaltung weist den Vorteil auf, dass einerseits der Referenzpfad $L_0$ und der Messpfad L getrennt voneinander ausgebildet sind und darüber hinaus der dritte Ultraschallwandler zur Erfassung der Lamb-Welle nicht innerhalb der Ultraschallanordnung zur Messung der Laufzeit angeordnet ist.

Zudem ist es auch vorteilhaft, wenn der erste Ultraschallwandler und der zweite Ultraschall und der dritte Ultraschallwandler als Ultraschallkamm oder als Interdigital-Wandler ausgebildet sind und wobei der dritte Ultraschallwandler zwischen dem ersten Ultraschallwandler und dem zweiten Ultraschallwandler angeordnet ist. In dieser Ausgestaltung kann der dritte Ultraschallwandler sowohl eine Lamb-Welle erfassen, wenn der erste Ultraschallwandler ein Signal in das Messrohr aussendet als auch, wenn der zweite Ultraschallwandler ein Signal in das Messrohr aussendet.

Besonders vorteilhaft ist es weiterhin, wenn die Länge des Referenzpfades $L_0$ klein ist im Vergleich zur Länge des Messpfades L, wobei vorzugsweise das Verhältnis $L_0/L$ kleiner 0,5 und besonders bevorzugt kleiner 0,2 oder kleiner 0,1 ist. Im Detail ist die Länge $L_0$ vorzugsweise derart kurz bemessen, dass die sich in Ausbreitungsrichtung abschwächende Lamb-Welle gut messbar ist. Der Vorteil der Erfindung zeigt sich insbesondere bei Messrohren mit großen Durchmessern, da der systematische Fehler, der durch die erfindungsgemäße Bestimmung der Lamb-Welle vermieden wird, bei langen Messpfaden besonders hoch ist.

Gemäß einer weiteren besonders bevorzugten Ausgestaltung ist zumindest der erste Ultraschallwandler als Ultraschallkamm oder als Interdigital-Wandler ausgebildet, wobei ein zweiter Ultraschallwandler in Strömungsrichtung versetzt zu dem ersten Ultraschallwandler derart angeordnet ist, dass zwischen den Ultraschallwandlern ein erster Messpfad L vorhanden ist und wobei ein weiterer zweiter Ultraschallwandler entgegen der Strömungsrichtung versetzt zu dem ersten Ultraschallwandler derart angeordnet ist, dass zwischen den Ultraschallwandlern ein zweiter Messpfad L vorhanden ist, sodass im Betrieb durch den ersten Ultraschallwandler gleichzeitig ein Messsignal in und entgegengesetzt zur Strömungsrichtung ausgesendet werden kann. Gemäß dieser Ausgestaltung ist der dritte Ultraschallwandler vorzugsweise zwischen dem ersten Ultraschallwandler und einem zweiten Ultraschallwandler angeordnet. Diese Ausgestaltung weist den Vorteil auf, dass die Laufzeitmessung der Messsignale besonders schnell erfolgen kann, wobei insbesondere gewährleistet werden kann, dass die Messung der Laufzeiten in und entgegengesetzt zur Strömungsrichtung unter denselben Prozessbedingungen erfolgen kann.

Gemäß einer zweiten Lehre der vorliegenden Erfindung wird die eingangs dargelegte Aufgabe durch ein eingangs genanntes Verfahren zur Bestimmung Geschwindigkeit eines strömenden Mediums dadurch gelöst,

dass wenigstens ein dritter Ultraschallwandler vorhanden ist, der im Betrieb derart auf dem Messrohr angeordnet ist, dass er einen zusätzlichen Referenzpfad $L_0$ definiert, wobei der Referenzpfad $L_0$ den Verlauf der von wenigstens einem Ultraschallsender in die Messrohrwand ausgesendete Lamb-Welle umfasst und

dass das Verfahren die folgenden Schritte umfasst:

- Aussenden eines ersten Signals durch den ersten Ultraschallwandler, wobei sich das erste Signal als Messsignal entlang des Messpfads L ausbreitet,

- Aussenden einer Lamb-Welle, die sich entlang des Referenzpfades $L_0$ ausbreitet,

- Erfassung der Lamb-Welle durch den dritten Ultraschallwandler und Weiterleitung des empfangenen Signals an die Steuer- und Auswerteeinheit, wobei die Steuer- und Auswerteeinheit die Ausbreitungsgeschwindigkeit der Lamb-Welle bestimmt,

- Erfassung des Messsignals durch den zweiten Ultraschallwandler und Weiterleitung des empfangenen Signals an die Steuer- und Auswerteeinheit,

- Ermittlung der Laufzeit des Messsignals unter Berücksichtigung der Ausbreitungsgeschwindigkeit der Lamb-Welle,

- Bestimmung der Geschwindigkeit des strömenden Mediums.

Im Rahmen der vorliegenden Erfindung umfasst ein erster Verfahrenszustand die Situation, dass der ersten Ultraschallwandler ein Messsignal aussendet, das von dem zweiten Ultraschallwandler empfangen wird. Der zweite Verfahrenszustand betrifft die Situation, dass der zweite Ultraschallwandler ein Messsignal aussendet, das von dem ersten Ultraschallwandler empfangen wird. Die Bestimmung der Geschwindigkeit des strömenden Mediums beruht auf dem bekannten Prinzip der Bildung der Laufzeitdifferenz eines Messsignals, das den Messpfad L in einem ersten Verfahrenszustand in Strömungsrichtung und in einem zweiten Verfahrenszustand entgegen der Strömungsrichtung durchläuft.

Das Ultraschalldurchflussmessgerät zur Durchführung des erfindungsgemäßen Verfahrens ist vorzugsweise nach einer der zuvor beschriebenen Ausgestaltungen ausgebildet.

Durch die erfindungsgemäße Bestimmung der Ausbreitungsgeschwindigkeit der Lamb-Welle in der Messrohrwand kann der Verlauf des Messsignals im Messrohr mit verbesserter Genauigkeit bestimmt werden, womit im Ergebnis die Messung der Geschwindigkeit eines strömenden Mediums und damit die Genauigkeit der Durchflussmessung verbessert werden kann.

Im Detail wird bei der Erfassung der Lamb-Welle die Laufzeit der Lamb-Welle für den Referenzpfad $L_0$ bestimmt. Aufgrund der bekannten zurückgelegten Wegstrecke $L_0$ lässt sich aus der gemessenen Laufzeit die Geschwindigkeit der Lamb-Welle, also die Ausbreitungsgeschwindigkeit des Signals in der Messrohrwand bestimmen.

Mittels des Zusammenhangs

$$\frac{\sin\theta}{c_M} = \frac{1}{v_{lamb}},$$

wobei $\Theta$ der Einkoppelwinkel des Messsignals in das Messrohr ist, wobei $c_M$ die Schallgeschwindigkeit im Medium ist und wobei $v_{lamb}$ die Geschwindigkeit der Lamb-Welle in der Messrohrwand ist,

kannaus der gemessenen Geschwindigkeit der Lamb-Welle der Einkoppelwinkel des Messsignals in das Messrohr und damit der genaue Verlauf des Messpfads im Messrohr bestimmt werden.

In Kenntnis des genauen Verlaufs des Messsignals im Messrohr kann ebenfalls ein Laufzeit-Offset bestimmt werden, der darauf zurückzuführen ist, dass das Messsignal in Ausbreitungsrichtung vor dem Ultraschallempfänger auf das Messrohr trifft, sodass sich das Messsignal noch entlang der Messrohrwand ausbreitet, bevor es vom Ultraschallempfänger erfasst wird.

Auch die Bestimmung des Laufzeit-Offsets, die ebenfalls durch Kenntnis der Ausbreitungsgeschwindigkeit der Lamb-Welle im Messrohr ermöglicht wird, verbessert die Genauigkeit der Laufzeitmessung des Messsignals und damit im Ergebnis die Genauigkeit der Bestimmung der Geschwindigkeit des strömenden Mediums.

Gemäß einer bevorzugten Ausführung des Verfahrens sendet in einem zweiten Verfahrenszustand der zweite Ultraschallwandler ein Messsignal aus, das sich entlang des Messpfades L in Richtung des ersten Ultraschallwandlers ausbreitet, wobei das Messsignal vom ersten Ultraschallwandler empfangen und an die Steuer- und Auswerteeinheit weitergeleitet wird und wobei die Geschwindigkeit des strömenden Mediums unter Berücksichtigung der im ersten Verfahrenszustand gemessenen Ausbreitungsgeschwindigkeit der Lamb-Welle bestimmt wird. Da davon auszugehen ist, dass die Geschwindigkeit der Lamb-Welle in der Messrohrwand zumindest während der Dauer eines Messzyklus, der zumindest einen ersten und einen zweiten Verfahrenszustand umfasst, konstant ist, ist es ausreichend, lediglich die Lamb-Welle zu erfassen, die in einem ersten Verfahrenszustand angeregt wird.

Alternativ kann auch ein weiterer Ultraschallwandler derart am Messrohr angeordnet sein, dass auch im zweiten Verfahrenszustand die Laufzeit der sich entlang des Messrohrs ausbreitenden Lamb-Welle bestimmt werden kann, sodass in jedem Verfahrenszustand die aktuelle Ausbreitungsgeschwindigkeit gemessen und bei der Bestimmung der Laufzeit des Messsignals berücksichtigt werden.

Zudem ist es auch vorteilhaft, wenn die Geschwindigkeit der Lamb-Welle nicht in jedem ersten Verfahrenszustand bestimmt wird, sondern beispielsweise in regelmäßigen Abständen. Beispielsweise kann die gemessene Geschwindigkeit einer Lamb-Welle der Auswertung der Messsignale solange zugrunde gelegt werden, bis eine Änderung eines Betriebsparameters, insbesondere eine Änderung der Temperatur des Messrohrs, erfasst wird.

Gemäß einer Ausgestaltung wird die Ausbreitungsgeschwindigkeit der Lamb-Welle vor der Inbetriebnahme des Ultraschalldurchflussmessgeräts erfasst.

Gemäß einer anderen Ausgestaltung wird die Ausbreitungsgeschwindigkeit der Lamb-Welle bei jeder Messung im ersten Verfahrenzustand bestimmt.

Gemäß einer anderen Ausgestaltung wird die Ausbreitungsgeschwindigkeit der Lamb-Welle in regelmäßigen Abständen oder bei Änderung eines Betriebsparameters erfasst.

Es gibt nun eine Vielzahl von Möglichkeiten das erfindungsgemäße Ultraschalldurchflussmessgerät und das erfindungsgemäße Verfahren auszugestalten und weiterzubilden. Hierzu wird verwiesen auf die den unabhängigen Patentansprüchen nachgeordneten Patentansprüche sowie auf die nachfolgende Beschreibung von bevorzugten Ausführungsbeispielen in Verbindung mit der Zeichnung. In der Zeichnung zeigen:

Fig. 1    ein Ultraschalldurchflussmessgerät aus dem Stand der Technik,

Fig. 2    ein erstes Ausführungsbeispiel eines erfindungsgemäßen Ultra-schalldurchflussmessgeräts,

Fig. 3    ein zweites Ausführungsbeispiel eines erfindungsgemäßen Ul-traschalldurchflussmessgeräts,

Fig. 4    ein drittes Ausführungsbeispiel eines erfindungsgemäßen Ultra-schalldurchflussmessgeräts,

Fig. 5    ein viertes Ausführungsbeispiel eines erfindungsgemäßen Ultra-schalldurchflussmessgeräts,

Fig. 6    ein weiteres Ausführungsbeispiel eines erfindungsgemäßen Ul-traschalldurchflussmessgeräts,

Fig. 7    ein weiteres Ausführungsbeispiel eines erfindungsgemäßen Ul-traschalldurchflussmessgeräts,

Fig. 8    ein erstes Ausführungsbeispiel eines erfindungsgemäßen Ver-fahrens.

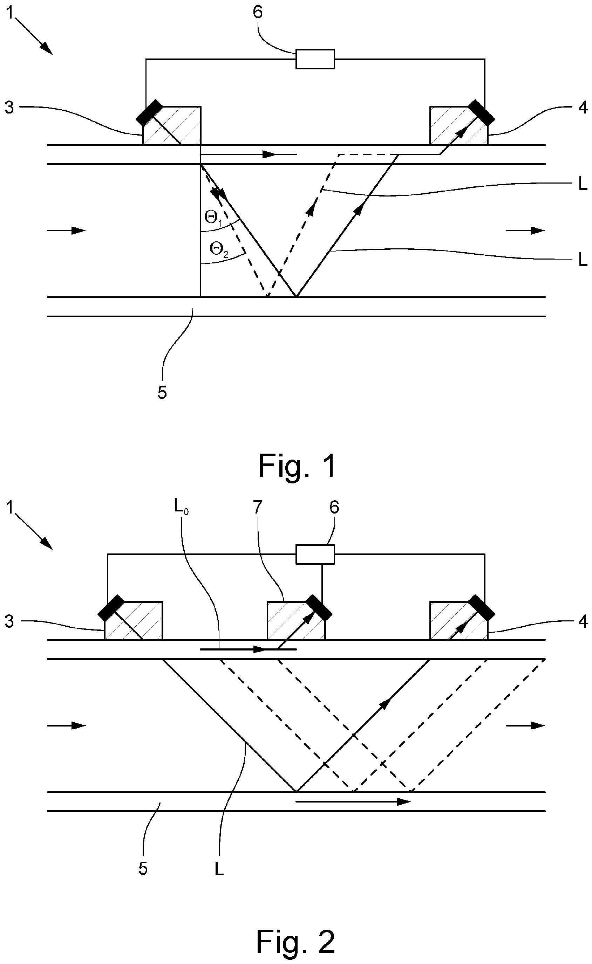

Fig. 1 zeigt ein aus dem Stand der Technik bekanntes Ausführungsbeispiel eines Ultraschalldurchflussmessgeräts 1. Das Ultraschalldurchflussmessgerät 1 umfasst einen ersten Ultraschallwandler 3, der im dargestellten Verfahrenszustand als Ultraschallsender funktioniert, und einen zweiten Ultraschallwandler 4, der im dargestellten Verfahrenszustand als Ultraschallempfänger funktioniert. Das dargestellte Ultraschalldurchflussmessgerät 1 ist als Clamp-On-Messgerät ausgebildet, d.h. die Ultraschallwandler 3, 4 werden auf ein in eine Anlage integriertes Messrohr 5 aufgesetzt und ausgerichtet. Zwischen dem ersten Ultraschallwandler 3 und dem zweiten Ultraschallwandler 4 verläuft der Messpfad L, wobei sich das von dem ersten Ultraschallwandler 3 ausgesendete Messsignal entlang des Messpfads L ausbreitet.

Zudem weist das Ultraschalldurchflussmessgerät 1 eine Steuer- und Auswerteeinheit 6 zur Ansteuerung der Ultraschallwandler 3, 4 und zur Auswertung der gemessenen Signale auf.

In dem dargestellten Verfahrenszustand sendet der erste Ultraschallwandler 3 ein Ultraschallsignal in das Messrohr 5. Hierzu koppelt das Signal zunächst in die Messrohrwand ein. Ein Teil dieses Signals koppelt im Weiteren unter dem Rayleigh-Winkel $\Theta$ in das Messrohr ein und breitet sich entlang des Messpfades L aus. Dabei ist die Größe des Rayleigh-Winkels insbesondere abhängig von der Ausbreitungsgeschwindigkeit des erzeugten Ultraschallsignals in der Messrohrwand. Fig. 1 zeigt die Einkopplung unter zwei verschiedenen Winkeln $\Theta_1$ und $\Theta_2$, die sich durch unterschiedliche Ausbreitungsgeschwindigkeiten des Ultraschallsignals in der Messrohrwand unterscheiden. Aus den unterschiedlichen Einkoppelwinkeln ergeben sich unterschiedliche Verläufe des Messsignals innerhalb des Messrohrs 5. Dargestellt ist ebenfalls, dass die Messsignale in Ausbreitungsrichtung der Messsignale vor dem Ultraschallempfänger 4 auf das Messrohr 5 treffen und an dieser Stelle erneut in die Messrohrwand einkoppeln. An den jeweiligen Messpfad L schließt sich insofern ein Offset an, der im Betrieb der Laufzeit-Messung als systematischer Fehler zugrunde liegt.

Weiterhin ist dargestellt, dass ein anderer Teil des von dem ersten Ultraschwallwandler 3 in die Messrohrwand eingekoppelten Signals sich als Lamb-Welle entlang der Messrohrwand ausbreitet.

Nachteilig an dieser Ausgestaltung ist, dass der genaue Verlauf des Messsignals und damit auch der Laufzeit-Offset nicht bekannt ist, sodass im Betrieb der Laufzeitmessung des Messsignals ein systematischer Fehler zugrunde liegt.

Fig. 2 zeigt ein erstes Ausführungsbeispiel eines erfindungsgemäßen Ultraschalldurchflussmessgeräts 1. Das dargestellte Ultraschalldurchflussmessgerät 1 weist ebenfalls einen ersten Ultraschallwandler 3 und einen zweiten Ultraschallwandler 4 auf, wobei zwischen dem ersten Ultraschallwandler 3 und dem zweiten Ultraschallwandler 4 ein Messpfad L angeordnet ist, auf dem sich das Messsignal zwischen den Ultraschallwandlern 3, 4 ausbreitet. Zudem ist ein dritter Ultraschallwandler 7 vorhanden, der zwischen dem ersten Ultraschallwandler 3 und dem zweiten Ultraschallwandler 4 angeordnet ist.

Der erste Ultraschallwandler 3 ist derart ausgerichtet, dass er durch die Aussendung des Messignals gezielt eine Lamb-Welle in der Messrohrwand anregt, die sich in Richtung des dritten Ultraschallwandlers ausbreitet.

Der dritte Ultraschallwandler 7 ist derart ausgerichtet, dass er die Lamb-Welle erfasst, die durch das Einkoppeln des Messsignals in die Messrohrwand entsteht. Im Betrieb definiert der dritte Ultraschallwandler 7

damit eine Referenzstrecke $L_0$. Da die Lamb-Welle ebenfalls als Leckagewelle in das Messrohr einkoppelt, wodurch sich ihre Amplitude verkleinert, ist die Länge der Referenzstrecke $L_0$ ausreichend klein für die Erfassung der Lamb-Welle.

Zudem weist das Ultraschalldurchflussmessgerät 1 eine Steuer- und Auswerteeinheit 6 auf, die im Betrieb die Ultraschallwandler 3, 4, 7 ansteuert und weiterhin die gemessenen Signale auswertet. Im Detail bestimmt die Steuer- und Auswerteeinheit 6 die Laufzeit der Lamb-Welle entlang der bekannten Referenzstrecke $L_0$ sowie die Ausbreitungsgeschwindigkeit der Lamb-Welle. Aus der Ausbreitungsgeschwindigkeit der Lamb-Welle bestimmt die Steuer- und Auswerteeinheit den genauen Verlauf des Messsignals in dem Messrohr 5. Im Ergebnis kann dadurch die Geschwindigkeit des strömenden Mediums mit einer verbesserten Genauigkeit bestimmt werden.

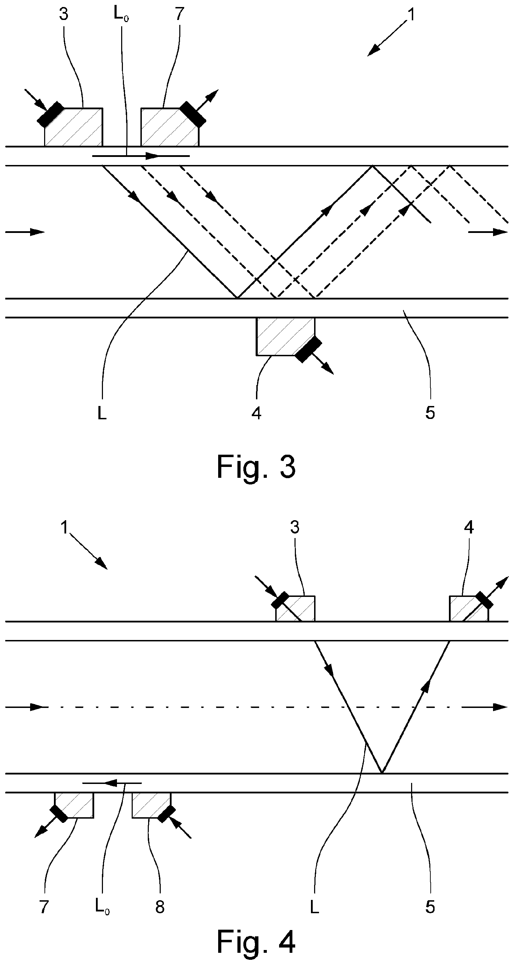

Fig. 3 zeigt ein weiteres Ausführungsbeispiel eines erfindungsgemäße Ultraschalldurchflussmessgeräts 1, umfassend einen ersten Ultraschallwandler 3 und einen zweiten Ultraschallwandler 4, wobei zwischen dem ersten Ultraschallwandler und dem zweiten Ultraschallwandler 4 der Messpfad L verläuft. Der erste und der zweite Ultraschallwandler 3, 4 sind an einander gegenüberliegenden Seiten am Messrohr 5 angeordnet. Neben dem ersten Ultraschallwandler 3 ist ein dritter Ultraschallwandler 7 angeordnet, der im Betrieb die Lamb-Welle erfasst, die mit dem ersten Messsignal in die Messrohrwand eingekoppelt wird. Die Lamb-Welle breitet sich entlang der Messrohrwand parallel zur Messrohrachse aus. Zudem ist dargestellt, dass die Lamb-Welle im Verlauf der Ausbreitung ebenfalls in das Messrohr einkoppelt, wodurch die Intensität der Lamb-Welle entlang der Ausbreitungsrichtung geschwächt wird.

Fig. 4 zeigt ein weiteres Ausführungsbeispiel eines erfindungsgemäßen Ultraschalldurchflussmessgeräts 1. Das Ultraschalldurchflussmessgerät 1 weist ebenfalls einen ersten Ultraschallwandler 3 und einen zweiten Ultraschallwandler 4 auf, zwischen denen der Messpfad L ausgebildet ist. Darüber hinaus ist ein dritter Ultraschallwandler 7 und ein vierter Ultraschallwandler 8 vorhanden, wobei der dritte Ultraschallwandler 7 und der vierte Ultraschallwandler 8 separat in Bezug auf die Anordnung von dem ersten und dem zweiten Ultraschallwandler 3, 4 angeordnet sind.

Zwischen dem dritten Ultraschallwandler 7 und dem vierten Ultraschallwandler 8 ist der Referenzpfad $L_0$ realisiert, sodass im Betrieb die Ausbreitungsgeschwindigkeit des Messsignals durch die Messrohrwand auch unabhängig von der Aussendung eines Messsignals zur Laufzeitmessung jederzeit bestimmt und der Berechnung der Geschwindigkeit des strömenden Mediums zugrunde gelegt werden kann. Der dritte Ultraschallwandler 7 und der vierte Ultraschallwandler 8 sind in der Messumgebung des ersten und des zweiten Ultraschallwandlers 3, 4 angeordnet. Hierdurch ist gewährleistet, dass die Ausbreitungsgeschwindigkeit des Messsignals in der Messrohrwand unter denselben Prozessbedingung wie die Laufzeitmessung bestimmt wird.

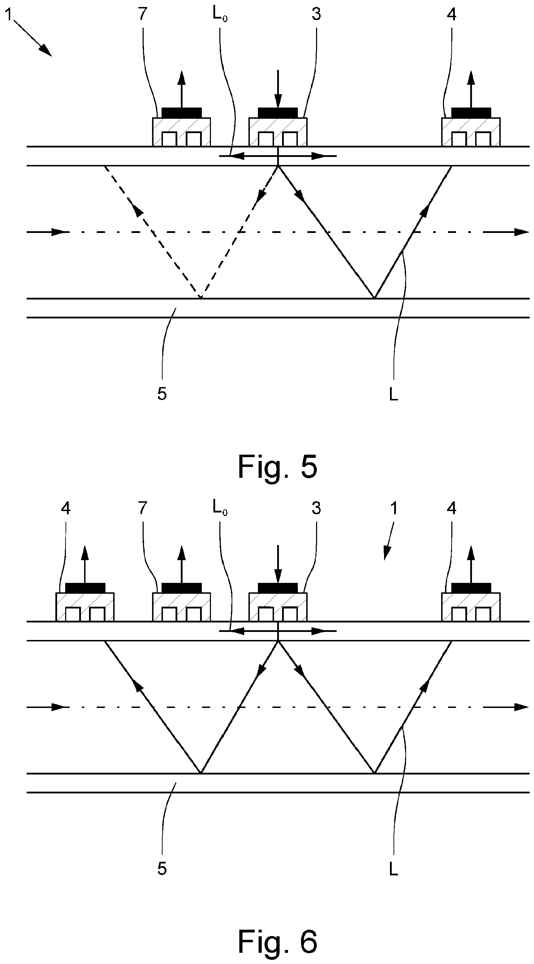

Fig. 5 zeigt ein weiteres Ausführungsbeispiel eines erfindungsgemäßen Ultraschalldurchflussmessgeräts 1. Im Unterschied zu den zuvor dargestellten Ultraschalldurchflussmessgeräten 1 sind der erste Ultraschallwandler 3 und der zweite Ultraschallwandler 4 als Ultraschallkamm ausgebildet, sodass das Messsignal und damit auch die sich in der Messrohrwand ausbreitende Lamb-Welle sich sowohl in Strömungsrichtung als auch entgegen der Strömungsrichtung fortsetzt. In dem dargestellten Ausführungsbeispiel ist der dritte Ultraschallwandler 7 zur Erfassung der Lamb-Welle, die sich in der Messrohrwand ausbreitet, neben dem ersten Ultraschallwandler 4 entgegen der Ausbreitungsrichtung des Messsignals innerhalb des Messrohrs 5, angeordnet.

Fig. 6 zeigt ein nächstes Ausführungsbeispiel eines erfindungsgemäßen Ultraschalldurchflussmessgeräts 1. Das Ultraschalldurchflussmessgerät 1 umfasst einen ersten Ultraschallwandler 3 zur Aussendung eines Messsignals und zwei Ultraschallwandler 4, die das Messsignal empfangen. Dabei sind sowohl der Ultraschallsender 3 als auch die Ultraschallempfänger 4 als Ultraschallkamm ausgebildet. Ein Ultraschallwandler 4 ist ausgehend von dem als Sender ausgebildeten Ultraschallwandler 3 in Strömungsrichtung angeordnet, der andere Ultraschallwandler 4 ist ausgehend von dem als Sender ausgebildeten Ultraschallwandler 3 entgegengesetzt der Strömungsrichtung angeordnet. Zudem ist ein weitere Ultraschallwandler 7 vorhanden, der derart angeordnet ist, dass er die durch die Aussendung des Messsignals angeregte Lamb-Welle erfasst.

Die dargestellte Anordnung der Ultraschallwandler 3, 4 weist den Vorteil auf, dass gleichzeitig ein Messsignal in und entgegengesetzt der Strömungsrichtung ausgesendet werden kann, sodass die Messung der Laufzeit eines Messsignal in und entgegengesetzt der Strömungsrichtung gleichzeitig erfolgen kann. Damit erfolgt die Bestimmung der Strömungsgeschwindigkeit aus den Laufzeiten der Messsignale in und entgegengesetzt der Strömungsrichtung besonders schnell. Insbesondere ist damit gewährleistet, dass zwischen der Laufzeitmessung in Strömungsrichtung und entgegengesetzt der Strömungsrichtung keine Änderung der Prozessparameter vorliegen.

Die dargestellte Anordnung zur gleichzeitigen Erfassung des Messsignals in und entgegengesetzt der Strömungsrichtung kann natürlich auch unabhängig von der Erfassung der Geschwindigkeit der Lamb-Welle erfolgen. Zudem können die Ultraschallwandler 4 auch als Keil-Wandler oder als Interdigital-Wandler ausgebildet sein.

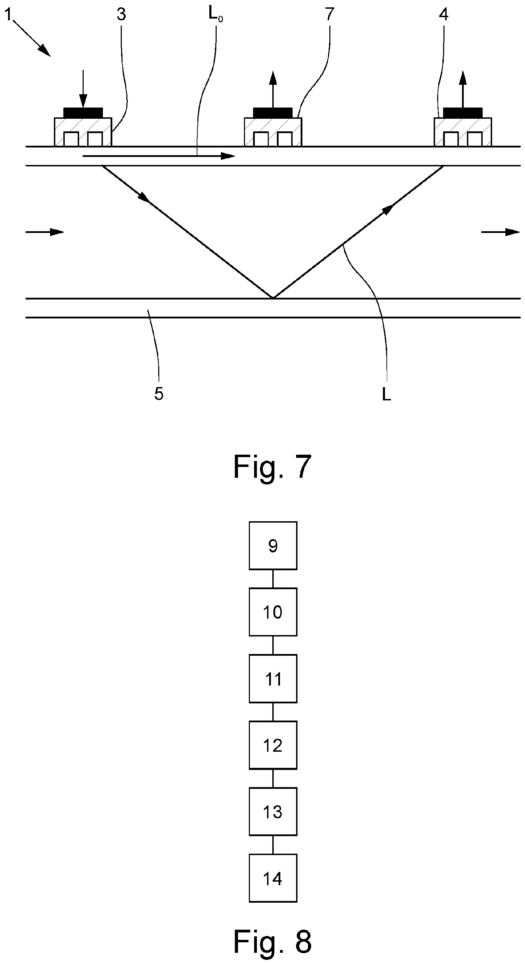

Fig. 7 zeigt ein nächstes Ausführungsbeispiel eines erfindungsgemäßen Ultraschalldurchflussmessgeräts 1, wobei alle Ultraschallwandler 3, 4, 7 als Ultraschallkämme ausgebildet sind. Der dritte Ultraschallwandler 7 zur Erfassung der Lamb-Welle ist dabei zwischen dem ersten Ultraschallwandler 3 und dem zweiten Ultraschallwandler 4 angeordnet. In dieser Ausgestaltung kann der Ultraschallwandler 7 sowohl die Lamb-Welle, die von dem ersten Ultraschallwandler 3 ausgesendet wird, registrieren, als auch die Lamb-Welle, die von dem zweiten Ultraschallwandler 4 ausgesendet wird, wenn dieser Ultraschallwandler 4 als Ultraschallsender funktioniert.

Fig. 8 zeigt ein erstes Ausführungsbeispiel eines erfindungsgemäßen Verfahrens 2 zur Bestimmung der Geschwindigkeit eines strömenden Mediums mit einem Ultraschalldurchflussmessgerät 1 wobei das Ultraschalladurchflussmessgerät 1 nach einer der Ausgestaltungen in den Fig. 2 bis 7ausgebildet ist.

In einem ersten Schritt 9 sendet der erste Ultraschallwandler 3 ein erstes Signal aus, wobei sich das erste Signal als Messsignal entlang des Messpfads L ausbreitet.

Gleichzeitig wird durch den ersten Ultraschallwandler 3 oder einen weiteren Ultraschallwandler 8 eine Lamb-Welle in der Messrohrwand erzeugt 10, die sich entlang des Referenzpfades $L_0$ ausbreitet.

Die Lamb-Welle wird durch den dritten Ultraschallwandler 7 erfasst 11 und das empfangene Signal wird an die Steuer- und Auswerteeinheit 6 weitergeleitet, wobei die Steuer- und Auswerteeinheit 6 die Ausbreitungsgeschwindigkeit der Lamb-Welle bestimmt.

Das Messsignal wird durch den zweiten Ultraschallwandler 4 erfasst und das empfangene Signal wird an die Steuer- und Auswerteeinheit 6 weitergeleitet.

Anschließend bestimmt 13 die Steuer- und Auswerteeinheit 6 die Laufzeit des Messsignals unter Berücksichtigung der Ausbreitungsgeschwindigkeit der Lamb-Welle.

Schließlich bestimmt 14 Steuer- und Auswerteeinheit 6 die Geschwindigkeit des strömenden Mediums unter Berücksichtigung der gemessenen Lamb-Welle. Dabei erfolgt die Bestimmung der Geschwindigkeit basierend auf der Laufzeitdifferenz eines sich in und entgegengesetzt zur Strömungsrichtung ausbreitenden Messsignals.

Im Detail bestimmt die Steuer- und Auswerteeinheit 6 aus der Ausbreitungsgeschwindigkeit der Lamb-Welle in der Messrohrwand den Rayleigh-Winkel, unter dem das Messsignal in das Messrohr 5 eingekoppelt wird. Auf diese Weise lässt sich die zurückgelegte Wegstrecke des Messsignals innerhalb des Messrohrs 5 besonders genau bestimmen. Zudem kann die Steuer- und Auswerteeinheit 6 ebenfalls einen Laufzeit-Offset des Messsignals bestimmen, der sich das dadurch ergibt, dass das Messsignal in Ausbreitungsrichtung vor dem zweiten Ultraschallwandler 4 auf das Messrohr 5 trifft.

Im Ergebnis können die Laufzeiten der Messsignale durch das Messrohr 5 und damit die Strömungsgeschwindigkeit des Mediums besonders genau bestimmt werden.

Je nach Ausgestaltung und Anordnung der Ultraschallwandler 3, 4, 7, 8 kann die Ausbreitungsgeschwindigkeit der Lamb-Welle in der Messrohrwand auch erfasst werden , wenn der zweite Ultraschallwandler 4 ein Messsignal in umgekehrter Ausbreitungsrichtung entlang des Messpfads L aussendet und gleichzeitig wiederum eine Lamb-Welle in der Messrohrwand anregt. Alternativ kann die in dem ersten Verfahrenszustand bestimmte Ausbreitungsgeschwindigkeit der Lamb-Welle auch der Auswertung des gemessenen Signals in dem zweiten Verfahrenszustand zugrundegelegt werden.

**Bezugszeichen**

1 Ultraschalldurchflussmessgerät
2 Verfahren zur Bestimmung Geschwindigkeit eines strömenden Mediums
3 erster Ultraschallwandler
4 zweiter Ultraschallwandler
5 Messrohr
6 Steuer- und Auswerteeinheit
7 dritter Ultraschallwandler
8 vierter Ultraschallwandler
9 Aussenden eines ersten Signals durch den ersten Ultraschallwandler
10 Aussenden einer Lamb-Welle
11 Erfassung der Lamb-Welle durch den dritten Ultraschallwandler
12 Erfassung des Messsignals durch den zweiten Ultraschallwandler
13 Ermittlung der Laufzeit des Messsignals
14 Bestimmung der Geschwindigkeit des strömenden Mediums

**Patentansprüche**

1. Ultraschalldurchflussmessgerät (1), umfassend wenigstens einen ersten (3) und einen zweiten Ultraschallwandler (4),

   wobei der erste Ultraschallwandler (3) und der zweite Ultraschallwandler (4) jeweils als Ultraschallsender und/oder Ultraschallempfänger ausgebildet sind,
   wobei der erste Ultraschallwandler (3) und der zweite Ultraschallwandler (4) im Betrieb auf einem Messrohr (5) derart versetzt zueinander angeordnet sind, dass zwischen dem ersten Ultraschallwandler (3) und dem zweiten Ultraschallwandler (4) ein Messpfad L vorhanden ist, wobei der Messpfad L durch den Verlauf des Ultraschall-Messsignals im Betrieb definiert wird, und
   weiterhin umfassend eine Steuer- und Auswerteeinheit (6) zur Steuerung der Ultraschallwandler (3,4) und zur Auswertung der gemessenen Signale,
   **dadurch gekennzeichnet,**
   **dass** wenigstens ein dritter Ultraschallwandler (7) vorhanden ist, der im Betrieb derart auf dem Messrohr (5) angeordnet ist, dass er einen zusätzlichen Referenzpfad $L_0$ definiert, wobei der Referenzpfad $L_0$ den Verlauf der von wenigstens einem Ultraschallsender (3, 4, 8) in die Messrohrwand ausgesendete Lamb-Welle umfasst und
   **dass** die Steuer- und Auswerteeinheit (6) derart ausgebildet ist, dass sie im Betrieb die Geschwindigkeit eines durch das Messrohr (5) strömenden Mediums unter Berücksichtigung der Ausbreitungsgeschwindigkeit der Lamb-Welle in der Messrohrwand bestimmt.

2. Ultraschalldurchflussmessgerät (1) nach Anspruch 1, **dadurch gekennzeichnet, dass** der Referenzpfad $L_0$ räumlich getrennt vom Messpfad L innerhalb der Messrohrwand, vorzugsweise im Wesentlichen parallel zur Messrohrachse, verläuft.

3. Ultraschalldurchflussmessgerät (1) nach Anspruch 1 oder 2, **dadurch gekennzeichnet, dass** der dritte Ultraschallwandler (7) zur Erfassung der Lamb-Welle zwischen dem ersten Ultraschallwandler (3) und dem zweiten Ultraschallwandler (4) angeordnet ist.

4. Ultraschalldurchflussmessgerät (1) nach einem der Ansprüche 1 bis 3, **dadurch gekennzeichnet, dass** der Referenzpfad $L_0$ zwischen einem dritten Ultraschallwandler (7) und einem vierten Ultraschallwandler (8) ausgebildet ist, wobei der dritte Ultraschallwandler (7) und der vierte Ultraschallwandler (8) räumlich getrennt von dem ersten Ultraschallwandler (3) und dem zweiten Ultraschallwandler (4) angeordnet sind.

5. Ultraschalldurchflussmessgerät (1) nach einem der Ansprüche 1 bis 4, **dadurch gekennzeichnet, dass** wenigstens ein Ultraschallwandler (3, 4, 7, 8) als Ultraschallkamm oder als Interdigital-Wandler ausgebildet ist, sodass der wenigstens eine als Ultraschallkamm oder als Interdigital-Wandler ausgebildete Ultraschallwandler (3, 4, 7, 8) im Betrieb ein Signal aussendet, das sich auf einem ersten Signalpfad in Strömungsrichtung und auf einem zweiten Signalpfad entgegen der Strömungsrichtung ausbreitet, wobei ein Signalpfad dem Messpfad L entspricht und wobei vorzugsweise der dritte Ultraschallwandler (7) auf der Seite des anderen Signalpfads angeordnet ist.

6. Ultraschalldurchflussmessgerät (1) nach einem der Ansprüche 1 bis 5, **dadurch gekennzeichnet, dass** die Länge des Referenzpfades $L_0$ klein ist im Vergleich zur Länge des Messpfades L, wobei vorzugs-

weise das Verhältnis $L_0/L$ kleiner 0,5 und besonders bevorzugt kleiner 0,2 oder kleiner 0,1 ist.

7. Ultraschalldurchflussmessgerät (1) nach einem der Ansprüche 1 bis 6, **dadurch gekennzeichnet, dass** zumindest der erste Ultraschallwandler (3) als Ultraschallkamm oder als Interdigital-Wandler ausgebildet ist, wobei ein zweiter Ultraschallwandler (4) in Strömungsrichtung versetzt zu dem ersten Ultraschallwandler (3) derart angeordnet ist, dass zwischen den Ultraschallwandlern ein erster Messpfad L vorhanden ist und wobei ein weiterer zweiter Ultraschallwandler (4) entgegen der Strömungsrichtung versetzt zu dem ersten Ultraschallwandler (3) derart angeordnet ist, dass zwischen den Ultraschallwandlern ein zweiter Messpfad L vorhanden ist, sodass im Betrieb durch den ersten Ultraschallwandler (3) gleichzeitig ein Messsignal in und entgegengesetzt zur Strömungsrichtung ausgesendet werden kann.

8. Verfahren (2) zur Bestimmung Geschwindigkeit eines strömenden Mediums mittels eines Ultraschalldurchflussmessgeräts (1), wobei das Ultraschalldurchflussmessgerät (1) wenigstens einen ersten Ultraschallwandler (3) und einen zweiten Ultraschallwandler (4) umfasst,

wobei der erste Ultraschallwandler (3) und der zweite Ultraschallwandler (4) jeweils als Ultraschallsender und/oder Ultraschallempfänger ausgebildet sind,
wobei der erste Ultraschallwandler (3) und der zweite Ultraschallwandler (4) auf einem Messrohr (5) derart versetzt zueinander angeordnet sind, dass zwischen dem ersten Ultraschallwandler (3) und dem zweiten Ultraschallwandler (4) ein Messpfad L vorhanden ist, wobei der Messpfad L durch den Verlauf des Ultraschall-Messsignals im Betrieb definiert wird, und weiterhin umfassend eine Steuer- und Auswerteinheit (6) zur Steuerung der Ultraschallwandler (3, 4, 7, 8) und zur Auswertung der gemessenen Signale,
**dadurch gekennzeichnet,**
**dass** wenigstens ein dritter Ultraschallwandler (7) vorhanden ist, der im Betrieb derart auf dem Messrohr (5) angeordnet ist, dass er einen zusätzlichen Referenzpfad $L_0$ definiert, wobei der Referenzpfad $L_0$ den Verlauf der von wenigstens einem Ultraschallsender (3, 4, 8) in die Messrohrwand ausgesendete Lamb-Welle umfasst und
**dass** das Verfahren (2) die folgenden Schritte umfasst:

- Aussenden (9) eines ersten Signals durch den ersten Ultraschallwandler (3), wobei sich das erste Signal als Messsignal entlang des Messpfads L ausbreitet,
- Aussenden (10) einer Lamb-Welle, die sich entlang des Referenzpfades $L_0$ ausbreitet,
- Erfassung (11) der Lamb-Welle durch den dritten Ultraschallwandler (7) und Weiterleitung des empfangenen Signals an die Steuer- und Auswerteinheit (6), wobei die Steuer- und Auswerteinheit (6) die Ausbreitungsgeschwindigkeit der Lamb-Welle bestimmt,
- Erfassung (12) des Messsignals durch den zweiten Ultraschallwandler (4) und Weiterleitung des empfangenen Signals an die Steuer- und Auswerteinheit (6),
- Ermittlung (13) der Laufzeit des Messsignals unter Berücksichtigung der Ausbreitungsgeschwindigkeit der Lamb-Welle,
- Bestimmung (14) der Geschwindigkeit des strömenden Mediums.

9. Verfahren (2) nach Anspruch 8, **dadurch gekennzeichnet, dass** in einem zweiten Verfahrenszustand der zweite Ultraschallwandler (4) ein Messsignal aussendet, das sich entlang des Messpfades L in Richtung des ersten Ultraschallwandlers (3) ausbreitet, wobei das Messsignal vom ersten Ultraschallwandler (3) empfangen und an die Steuer- und Auswerteinheit (6) weitergeleitet wird und wobei die Geschwindigkeit des strömenden Mediums unter Berücksichtigung der im ersten Verfahrenszustand gemessenen Ausbreitungsgeschwindigkeit der Lamb-Welle bestimmt wird.

10. Verfahren (2) nach Anspruch 8 oder 9, **dadurch gekennzeichnet, dass** die Ausbreitungsgeschwindigkeit der Lamb-Welle vor der Inbetriebnahme des Ultraschalldurchflussmessgeräts (1) erfasst wird.

11. Verfahren (2) nach Anspruch 8 oder 9, **dadurch gekennzeichnet, dass** die Ausbreitungsgeschwindigkeit der Lamb-Welle bei jeder Messung im ersten Verfahrenzustand bestimmt wird.

12. Verfahren (2) nach Anspruch 8 oder 9, **dadurch gekennzeichnet, dass** die Ausbreitungsgeschwindigkeit der Lamb-Welle in regelmäßigen Abständen oder bei Änderung eines Betriebsparameters erfasst wird.

Fig. 1

Fig. 2

Fig. 3

Fig. 4

Fig. 5

Fig. 6

Fig. 7

Fig. 8

**Europäisches Patentamt**
**European Patent Office**
**Office européen des brevets**

## EUROPÄISCHER RECHERCHENBERICHT

**Nummer der Anmeldung**

**EP 22 15 7485**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 644 022 A1 (DIEHL METERING GMBH [DE]) 29. April 2020 (2020-04-29) * Absatz [0032] – Absatz [0049]; Abbildungen 1-2 * ----- | 1-12 | INV. G01F1/667 G01F1/66 |
| X | DE 10 2013 101950 A1 (UNIV DRESDEN TECH [DE]) 7. November 2013 (2013-11-07) * Absatz [0066] – Absatz [0071]; Abbildungen 1-4 * ----- | 1,8 | |
| A | WO 2011/078691 A2 (TECOM AS C O CHRISTIAN MICHELSEN RES AS [NO] ET AL.) 30. Juni 2011 (2011-06-30) * Seite 11 – Seite 24; Abbildungen 1-8 * ----- | 1-12 | |

**RECHERCHIERTE SACHGEBIETE (IPC)**

G01F

Der vorliegende Recherchenbericht wurde für alle Patentansprüche erstellt

| Recherchenort | Abschlußdatum der Recherche | Prüfer |
|---|---|---|
| Den Haag | 23. Juni 2022 | Decaix, François |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 15 7485

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-06-2022

| Im Recherchenbericht angeführtes Patentdokument | Datum der Veröffentlichung | Mitglied(er) der Patentfamilie | Datum der Veröffentlichung |
|---|---|---|---|
| EP 3644022 A1 | 29-04-2020 | DE 102018008393 A1<br>EP 3644022 A1 | 30-04-2020<br>29-04-2020 |
| DE 102013101950 A1 | 07-11-2013 | KEINE | |
| WO 2011078691 A2 | 30-06-2011 | BR 112012015646 A2<br>WO 2011078691 A2 | 12-09-2017<br>30-06-2011 |

EPO FORM P0461

Für nähere Einzelheiten zu diesem Anhang : siehe Amtsblatt des Europäischen Patentamts, Nr.12/82